# FASCICULE DE BREVET EUROPEEN

(11) **EP 2 072 168 B1**
(45) Date de publication et mention de la délivrance du brevet: **06.03.2013**
(21) Numéro de dépôt: 08305978.2
(22) Date de dépôt: 19.12.2008
(51) Int. Cl.: B23K 11/14, F28F 9/18, F28D 1/053, B23K 101/14

(54) **Procédé de soudure d'éléments tubulaires pour radiateur à fluide caloporteur**
Schweißverfahren von Rohrelementen für einen Radiator mit flüssigem Wärmeträger
Method for welding tubular elements for a radiator with a heat-transfer fluid

(30) Priorité: 21.12.2007 FR 0709079
(43) Date de publication de la demande: 24.06.2009
(73) Titulaire: San Martino Intermediate Holding B.V., 1017 Amsterdam (NL)
(72) Inventeur: Lecommandeur, Noël, 85000 La Roche sur Yon (FR)
(74) Mandataire: Laget, Jean-Loup

(56) Documents cités:
- EP-A- 0 962 711
- EP-A- 2 034 264
- DE-A1- 1 551 434
- DE-U1- 8 906 829
- FR-A- 2 328 937
- FR-A- 2 475 708

## Description

La présente invention concerne un procédé de soudure par points pour l'assemblage d'éléments tubulaires pour radiateurs à fluide caloporteur selon le préambule de la revendication 1. Un tel procédé est connu de FR 2 328 937.

Les radiateurs à fluide caloporteur sont constitués d'un assemblage d'éléments tubulaires métalliques comprenant généralement des tubes chauffants reliés à des conduites collectrices (conduites d'arrivée de fluide chaud et conduite de collecte du fluide refroidi). Le fluide caloporteur circule dans l'ensemble de ces éléments tubulaires par l'intermédiaire d'orifices ménagés en vis-à-vis dans les conduites collectrices et dans les tubes chauffants. Lesdits tubes chauffants sont généralement soudés directement aux conduites collectrices au niveau de leurs zones de contact en vis-à-vis incluant les orifices de circulation du fluide.

La soudure permet à la fois la fixation des éléments tubulaires entre eux et l'étanchéité de la communication du fluide entre une conduite collectrice vers et à partir du tube chauffant. Des défauts de soudure pouvant générer des défauts d'étanchéité, au niveau des orifices, la soudure des éléments tubulaires entre eux doit donc être réalisée avec soin.

Un des buts de la présente invention est de simplifier et de fiabiliser la soudure desdits éléments tubulaires, en particulier lorsque ces derniers sont disposés en croix.

Or la soudure entre les tubes chauffants et les conduites collectrices, pour les radiateurs à fluide caloporteur, est réalisée classiquement par un procédé de soudure électrique. Ce procédé consiste à serrer, entre deux électrodes, ces deux éléments tubulaires l'un contre l'autre puis à faire passer entre ces deux électrodes, pendant un temps très bref, un courant de forte intensité. Le passage du courant, associé à l'effort mécanique qui presse les éléments tubulaires l'un contre l'autre, soude ces derniers dans la zone où ils sont en contact.

Lorsque la soudure est bien réalisée elle forme, au moins, un cordon étanche autour de l'orifice prévu pour le passage du fluide caloporteur d'un élément tubulaire à l'autre. La fiabilité de la soudure dépend donc directement de la maîtrise des contacts entre le tube chauffant et la conduite collectrice, et donc de leur positionnement relatif l'un par rapport à l'autre.

De manière classique, le tube chauffant et la conduite collectrice à souder sont disposés en croix, généralement perpendiculairement l'un par rapport à l'autre. Lorsque ces deux éléments tubulaires présentent tous deux une forme cylindrique, la zone de contact se situe à l'intersection des génératrices des deux éléments tubulaires ; elle est donc assez précise, car "ponctuelle". Lorsque l'un des deux éléments tubulaires a une forme sensiblement plane dans la zone de contact, par exemple si cet élément possède une section rectangulaire, la zone de contact est moins précise, car sensiblement "linéaire". Lorsque les deux éléments tubulaires présentent une forme sensiblement plane dans la zone de contact, la zone de contact est encore moins précise, car sensiblement "surfacique".
La fiabilité des soudures lorsque les zones de contact sont "linéaires" ou "surfaciques" impose une fabrication très précise des tubes et un positionnement très précis de ces tubes avant leur soudure.

Or parmi les radiateurs, les radiateurs sèche-serviettes de type arborescents mettent en oeuvre des assemblages dans lesquels les tubes chauffants, sensiblement horizontaux, sont connectés à une conduite de distribution et une conduite de collecte sensiblement verticales situées à proximité l'une de l'autre, laissant libre au moins une des extrémités des tubes chauffants pour y apposer des serviettes, comme décrit dans la demande de brevet français FR 07-06235. Ces conduites servent également de montants support des dits tubes chauffants.

Chacun des tubes chauffants sensiblement horizontaux nécessite, selon FR 07-06235 une chambre interne unique sans cloisonnement dans laquelle circule le fluide caloporteur et comporte en conséquence deux orifices communiquant l'un avec la conduite de distribution et l'autre avec la conduite de collecte du fluide. Ces deux orifices sont donc ménagés, pour chaque tube chauffant, à proximité l'un de l'autre.

Une forme avantageuse de ces tubes chauffants est une forme de lame parallélépipédique de section rectangulaire, l'orifice d'entrée du fluide chaud étant disposé en partie haute, et l'orifice de sortie du fluide refroidi étant disposé en partie basse de la lame.

Pour la soudure de ces tubes chauffants aux conduites de distribution et de collecte, on se trouve donc dans la situation d'une zone de contact de type "linéaire" (si les conduites sont cylindriques) ou de type "surfacique" si les conduites présentent une surface plane en vis-à-vis des tubes chauffants.

Le problème est donc de mettre au point un procédé de soudure permettant d'assurer un contact suffisamment précis entre le tube chauffant et la conduite, afin d'être sûr que la soudure soit réalisée en conférant une étanchéité parfaite du passage du fluide entre les orifices du tube chauffant et de la conduite collectrice.

Le problème à résoudre est également, dans le processus de soudure des éléments tubulaires disposés en croix, d'assurer un positionnement relatif du tube chauffant et de la conduite collectrice suffisamment précis pour ne pas obturer l'un ou l'autre des orifices, ni réduire leur section de passage, lors de la soudure et de respecter ainsi la dimension prévue de la section de passage d'un tube chauffant vers la conduite collectrice et réciproquement.

Ces contraintes de positionnement sont en outre accentuées pour les radiateurs de type sèche-serviettes arborescents, dont les conduites collectrices sont disposées à proximité l'une de l'autre. En effet, dans ce type d'assemblage, pour des raisons d'encombrement, il est difficile de souder une lame à chacune des conduites collectrices séparément. II est donc nécessaire de placer avec une grande précision les trois éléments tubulaires l'un par rapport aux autres, en tenant compte également de l'emplacement respectif de chacun des orifices.

La présente invention a pour but de pallier les inconvénients précités en proposant un procédé de soudure garantissant un contact très précis entre les zones, sans nécessiter un usinage très précis des tubes, mais en facilitant le positionnement précis des éléments tubulaires entre eux avant l'opération de soudure proprement dite.

Un autre but de l'invention est de réduire les coûts de fabrication de tels radiateurs à fluide caloporteur.

A cet effet, le procédé de soudure électrique pour l'assemblage d'éléments tubulaires pour radiateur à fluide caloporteur, notamment de soudure d'au moins un tube chauffant avec une conduite collectrice, disposés en croix et présentant des orifices en vis-à-vis en vue d'assurer la communication du fluide à l'intérieur desdits éléments tubulaires, comportant le serrage, entre deux électrodes, desdits éléments entre eux pour créer une zone de contact des parois externes desdits éléments et la réalisation de la soudure au niveau de ladite zone de contact par passage d'un courant de forte intensité pendant un temps très bref, est, selon l'invention, caractérisé en ce que, avant l'étape de serrage entre les électrodes, sont ménagées dans la paroi externe d'au moins un des éléments tubulaires à souder une première zone d'appui, dite zone d'appui initial, et une seconde zone d'appui, dite zone d'appui final après soudure des éléments tubulaires, la première zone d'appui étant localisée au moins à la périphérie d'au moins un des orifices de communication de fluide et formant une protubérance par rapport à la seconde zone d'appui, les éléments tubulaires comprenant au moins un tube chauffant comportant une chambre interne unique sans cloisonnement et deux conduites collectrices situées à proximité l'une de l'autre, lesdits éléments tubulaires étant soudés simultanément.

Ainsi, le prépositionnement des éléments tubulaires l'un par rapport à l'autre avant soudure est facilité. Lors de l'application du courant, le métal des parois externes des éléments tubulaires métalliques en contact l'une avec l'autre au niveau de la première zone d'appui, entre en fusion. Sous l'effet de la forte pression appliquée sur les éléments tubulaires pris en mâchoire entre les deux électrodes, la protubérance s'affaisse et vient se situer dans le prolongement (c'est-à-dire dans le même plan si cette zone d'appui final est plane) de la zone d'appui final desdits éléments.

De manière avantageuse, la première zone d'appui formant protubérance est localisée exclusivement à la périphérie du ou des orifice(s). La surface de la zone de contact initiale des éléments tubulaires avant soudure est minimale, pouvant se réduire à un cordon annulaire autour dudit orifice. Cette surface réduite diminue de ce fait le nombre de points de passage du courant et par conséquent la quantité d'énergie nécessaire lors de la soudure.

Lorsque la première surface d'appui est localisée exclusivement à la périphérie d'au moins un des orifices de communication du fluide caloporteur, la zone soudée s'étend sur une zone annulaire autour desdits orifices, plus ou moins étendue selon la hauteur initiale de la protubérance. En effet, lors de la fusion du métal la protubérance s'aplatit et au moins une portion de la zone d'appui final peut être liée au métal en vis-à-vis et ainsi englobée dans la zone soudée.

La première zone d'appui formant protubérance est obtenue, de préférence, par déformation locale d'une portion de la paroi de l'élément tubulaire. La protubérance est ainsi réalisée sans apport de matière.

Selon un premier mode de réalisation de l'invention, la déformation locale est obtenue par élargissement de la section dudit élément tubulaire au niveau de la zone périphérique de l'orifice.

Selon un second mode de réalisation de l'invention, la déformation locale est obtenue par rétrécissement de la section dudit élément tubulaire dans la région adjacente à la zone périphérique de l'orifice.

De manière avantageuse, le procédé de soudure de la présente invention peut s'appliquer à un élément tubulaire constituant le tube chauffant qui comporte deux orifices, un orifice d'entrée et un orifice de sortie, ménagés soit à proximité de la même extrémité dudit tube chauffant, soit au niveau de la zone médiane dudit tube chauffant.

Chaque tube chauffant est ainsi soudé aux deux conduites collectrices, de préférence cylindriques, situées à proximité l'une de l'autre, une conduite pour le fluide chaud et une conduite pour le fluide refroidi. Ces conduites collectrices sont disposées soit avec un certain écartement l'une par rapport à l'autre :
- cet écartement étant, par exemple approximativement égal ou inférieur à la valeur de deux diamètres de conduites collectrices, de préférence égal ou inférieur au diamètre d'une conduite collectrice
- soit peuvent être accolées.

Selon une autre variante de réalisation, il peut être prévu que chaque tube chauffant soit soudé à un élément tubulaire unique, dont le volume interne est avantageusement compartimenté de manière à créer deux compartiments, équivalents aux deux conduites collectrices précitées, l'un des compartiments correspondant à l'arrivée du fluide caloporteur chaud, et l'autre compartiment au retour du fluide refroidi. Dans ce cas, La présence de la protubérance permet, dans tous les cas, de s'assurer que la soudure s'effectuera bien simultanément autour de chacun des deux orifices afin d'assurer ultérieurement une parfaite étanchéité du passage du fluide entre la ou les conduite(s) collectrice(s) et le tube chauffant.

Ainsi, l'opération de soudure peut s'effectuer entre un tube chauffant et les deux conduites collectrices simultanément, grâce au bon positionnement de ces trois éléments tubulaires les uns par rapport aux autres. II en résulte un gain de temps appréciable des différentes opérations de soudure pour l'assemblage d'un radiateur complet.

L'invention sera bien comprise à la lecture de la description suivante d'exemples de réalisation, en référence aux dessins annexés dans lesquels :
La figure 1 est une vue partielle en élévation d'un assemblage d'éléments tubulaires d'un radiateur à fluide caloporteur ;
La figure 2 est une vue en coupe de deux éléments tubulaires avant soudure selon un premier mode de réalisation de l'invention ;
La figure 3 est une vue en coupe de deux éléments tubulaires avant soudure selon un second mode de réalisation de l'invention ;
La figure 4 est une vue en coupe partielle selon AA de la figure 1 correspondant aux éléments tubulaires après soudure ;
La figure 5 est une vue en perspective d'une zone d'assemblage d'éléments tubulaires présentant les zones d'appui selon le second mode de réalisation de l'invention ;
La figure 6 est une vue partielle en élévation d'un assemblage d'éléments tubulaires selon une première variante de la présente invention ;
La figure 7 est une partie en élévation d'un assemblage d'éléments tubulaires selon une seconde variante de la présente invention ;
Les figures 7A et 7B sont des vues en coupe de la figure 7 selon BB correspondant à deux exemples de réalisation.

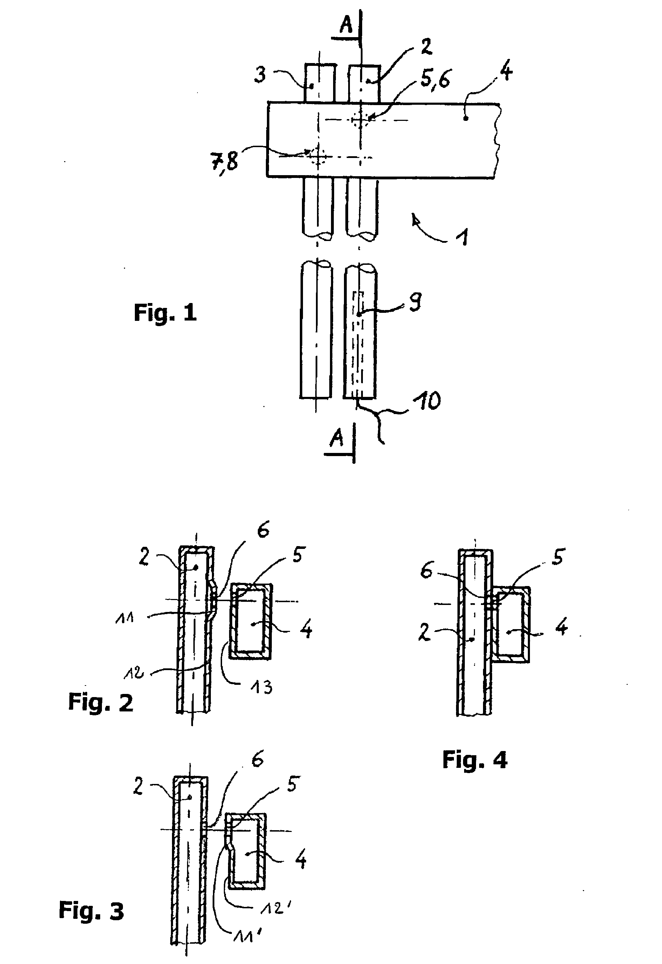

Le procédé selon la présente invention permet par exemple de réaliser un radiateur 1 assemblé selon le schéma présenté sur la figure 1.

Ce radiateur 1 est, à l'état assemblé, constitué de divers éléments tubulaires métalliques comprenant une première conduite collectrice 2 destinée à véhiculer le fluide caloporteur chaud, une seconde conduite collectrice 3 pour collecter le fluide caloporteur froid et généralement d'une pluralité de tubes chauffants 4 (un seul est représenté ici) disposés perpendiculairement auxdites conduites collectrices 2, 3, comme visible sur le haut de la figure 1. Chaque tube chauffant 4 comporte de préférence une chambre interne unique et deux orifices respectivement un orifice d'entrée 5 et un orifice de sortie 7 du fluide.

Tel que représenté sur la figure 1, en partie basse du radiateur, le fluide caloporteur est chauffé par une résistance chauffante 9 interne reliée à une alimentation électrique 10. Le fluide caloporteur chaud monte alors dans la conduite collectrice 2 chaude puis quitte cette dernière par chaque orifice 6 de sortie de conduite chaude pour entrer dans les tubes chauffants 4 correspondants par leurs orifices d'entrée 5 de tube respectifs. Après s'être refroidi, le fluide caloporteur ressort ensuite du tube chauffant 4 par chaque orifice 7 de sortie de tube et entre dans la conduite collectrice froide 3 par l'orifice 8 correspondant d'entrée de conduite froide.

Le radiateur 1 de la figure 1 est un radiateur électrique à fluide caloporteur. En variante, ledit radiateur pourrait être raccordé, par l'intermédiaire des conduites collectrices, à une installation de chauffage central. La résistance chauffante 9 pourrait alors être omise.

Les paires d'orifices communicants entre eux, à savoir d'une part les orifices de sortie 6 de la conduite collectrice chaude 2 et d'entrée 5 de tube chauffant et d'autre part, les orifices de sortie 7 de tube chauffant et d'entrée 8 de conduite collectrice sont placés en vis-à-vis et l'étanchéité du passage du fluide est assurée par un cordon de soudure ménagé à leur périphérie.

Le radiateur 1 présenté sur cette figure 1 est constitué de deux conduites collectrices 2, 3 cylindriques disposées à proximité l'une de l'autre sur lesquelles sont soudés une pluralité de tubes chauffants 4 de section sensiblement rectangulaire, dont un seul est représenté ici.

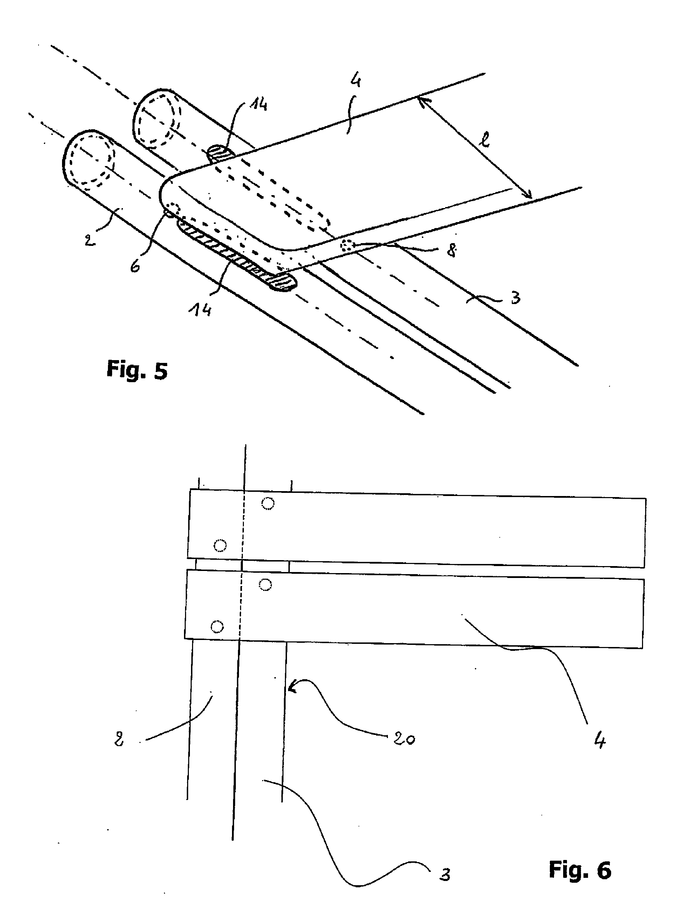

En variante, comme schématisé sur la figure 6, le radiateur peut comprendre deux conduites collectrices 2, 3 accolées, formant un montant unique 20.

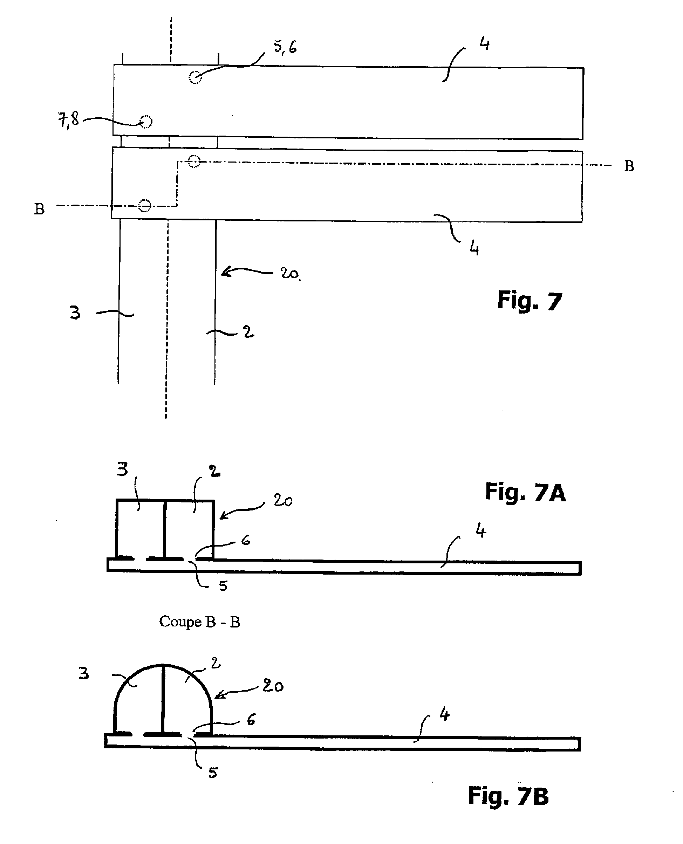

Selon une autre variante schématisée aux figures 7, 7A et 7B, les tubes chauffants 4 sont soudés à un élément tubulaire unique, aussi un montant unique 20 (par exemple de section rectangulaire - figure 7A - ou approximativement demi-circulaire - figure 7B) dont le volume interne est divisé longitudinalement en deux compartiments, équivalents aux deux conduites collectrices 2, 3.

Le procédé de soudure réalisé entre les éléments tubulaires est un procédé de soudure électrique de type soudure par points. Ce procédé de soudure consiste à serrer les deux éléments à souder entre deux électrodes, puis à faire passer entre les deux électrodes, pendant un temps très bref, un courant de forte intensité. Le passage du courant soude les deux éléments tubulaires dans la zone où ces derniers sont en contact. Pour souder chaque tube chauffant 4 sur les deux conduites collectrices 2, 3, en formant des cordons de soudure étanches autour des paires d'orifices 5, 6 et 7, 8 en vis à vis, les électrodes viennent serrer les parois des éléments tubulaires, au droit desdites paires d'orifices 5, 6 et 7, 8.

Selon la présente invention, avant le passage du courant en vue de la soudure, au moins l'un des éléments tubulaires à souder est déformé localement, comme décrit ci-après.

Selon un premier mode de réalisation, présenté à la figure 2, la paroi de la conduite collectrice 2 située autour de l'orifice de sortie 6 a été préalablement élargie (par exemple par emboutissage) de manière à former une zone de forme annulaire dépassant de la paroi de la conduite située autour de cette dite zone annulaire. Cette zone annulaire peut, par exemple, être plane, similaire à un disque, dont le centre correspond à l'orifice 6. Cette zone annulaire autour de l'orifice 6 constitue une première zone d'appui 11 formant protubérance par rapport à la surface qui l'entoure, constituant une seconde zone d'appui 12, et permet de garantir que le tube chauffant 4 sera en contact avec la paroi externe 13 du tube chauffant 4 en vis à vis, dans la région des orifices 5 et 6, lorsque ces éléments tubulaires seront serrés entre eux avant leur soudure. Cette surface de contact permet d'assurer une soudure formant un cordon, étanche, au moins autour des orifices 5 et 6.

De manière similaire, la conduite collectrice 3 (non représentée sur la figure 2) présente une protubérance annulaire localisée autour de l'orifice d'entrée 8 pour constituer une première zone d'appui avec la région correspondante du tube chauffant 4 située autour de l'orifice de sortie 7, par rapport à une seconde zone d'appui finale.

La hauteur de la protubérance est limitée (de l'ordre de quelques millimètres), si l'on veut que le tube chauffant 4 vienne s'appuyer sur la conduite collectrice 2 sur l'ensemble de la seconde zone d'appui final, après soudure des deux éléments tubulaires respectifs 2, 4. II est possible également de prévoir une protubérance d'une hauteur supérieure, pour limiter l'étendue de la zone d'appui final entre les éléments tubulaires 2, 4 après soudure.

Selon un second mode de réalisation, présenté à la figure 3, la protubérance formant la première zone d'appui 11' est ménagée (ici sur le tube chauffant 4) par rétrécissement de la section du tube chauffant dans la région adjacente à la zone périphérique de l'orifice d'entrée 5. La seconde zone d'appui 12' correspond à la paroi externe rétrécie du tube chauffant 4 en vis-à-vis de la conduite collectrice 2.

II est également possible, pour garantir un contact encore meilleur dans les zones des orifices 5 et 6, respectivement 7 et 8, avant la soudure des éléments tubulaires, de déformer à la fois la conduite collectrice 2, respectivement 3 et le tube chauffant 4 dans les zones périphériques de leurs orifices en vis-à-vis.

A la fin du processus de soudure, les surfaces en vis-à-vis des conduites collectrices et du tube chauffant 4 sont rapprochées l'une de l'autre, voire en appui l'une sur l'autre, comme représenté en coupe sur la figure 4.

La figure 5 présente en perspective les parois embouties des conduites collectrices 2, 3 pour constituer des zones en retrait 14 par rapport au reste de la paroi externe de ces conduites. Les zones en retrait 14 s'étendent axialement sur une surface de longueur approximativement voisine de la largeur I d'un tube chauffant, mais laissant inchangées les zones annulaires autour des orifices de sortie 6, respectivement d'entrée 8, des conduites 2, 3. Ces zones annulaires constituent alors les premières zones d'appui (appui initial) sur lesquelles va venir en contact la paroi externe du tube chauffant en vis-à-vis lors du serrage des électrodes. Le courant appliqué aux électrodes viendra donc prioritairement souder les éléments tubulaires dans ces zones de contact.

La réduction de la surface de ces zones initiales de contact des éléments tubulaires par rapport aux procédés actuels soudant la totalité de la zone de juxtaposition desdits éléments tubulaires, permet de réduire l'énergie nécessaire pour l'opération de soudure. II en résulte un gain du point de vue économique. Ce procédé de soudure peut en outre être facilement automatisé lorsque tous les tubes sont de forme et de taille identiques.

L'adaptation de la forme d'au moins un élément tubulaire dans les zones de contact, pour garantir un contact précis, est particulièrement importante dans le cas du type de radiateur 1 présenté sur la figure 1. Ce radiateur 1 est composé de deux conduites collectrices 2, 3, ici de forme cylindrique, situées à proximité l'une de l'autre, sur lesquelles est soudé au moins un tube chauffant 4 en forme de lame, ici de section rectangulaire. En effet, le fait que les deux conduites collectrices 2, 3 soient rapprochées, combiné avec le fait que le tube chauffant 4 présente une largeur importante, renforce le risque d'avoir un mauvais positionnement et un mauvais contact entre les tubes 2, 3, 4 avant leur soudure. Ce type de radiateur est souvent appelé "arborescent", comportant en général une multiplicité de tubes chauffants 4, qui, en fonction de leur positionnement par rapport aux conduites collectrices, présentent soit une extrémité en porte à faux, soit deux extrémités en porte à faux. Un tel type de radiateur arborescent est utilisé, notamment, en tant que radiateur sèche-serviettes, les extrémités libres des tubes chauffants facilitant la pose des serviettes et leur préhension.

Dans une autre forme de réalisation d'un radiateur de type arborescent (représenté sur la figure 6), les conduites collectrices 2, 3 peuvent être accolées créant un montant unique 20, par exemple de section rectangulaire remplacées par une conduite collectrice unique de section plus importante. Cette conduite collectrice unique peut par exemple avoir une section rectangulaire, de même largeur que l'ensemble formé par deux conduites collectrices 2, 3 et même épaisseur que ces dernières. La communication entre cette conduite collectrice unique et le tube chauffant 4 peut être assurée par deux passages, comme sur la figure 1 (deux paires d'orifices 5, 6 et 7, 8) ou un seul passage de plus grande taille. Pour ce type de radiateur également, la qualité de la soudure peut être améliorée en déformant l'un des éléments tubulaires pour créer une première zone d'appui protubérante, de forme annulaire, autour d'au moins un des orifices du passage, avant de souder le tube chauffant simultanément à chacune des conduites collectrices.

A titre d'illustration, le procédé selon la présente invention permet de souder des tubes chauffants sous forme de lames parallélépipédiques creuses, sans compartiment ni entretoises intérieures (par exemple de dimensions approximatives suivantes : largeur I 80-100 mm, longueur pouvant aller jusqu'à 600 mm et épaisseur 7 à 15 mm) comportant deux orifices de diamètre compris entre 6 et 7 mm à deux conduites collectrices cylindriques de diamètre compris entre 30 et 40 mm, une conduite chaude, et une conduite froide, disposées parallèlement l'une à l'autre avec un espacement voisin de 10 mm, dans chacune d'entre elles étant ménagés des orifices de diamètre voisin de 7 mm.

Les soudures réalisées conformément au procédé de la présente invention par réalisation de protubérances dans les conduites collectrices, ou dans les lames chauffantes des radiateurs des figures 1, 6 ou 7, se sont avérées suffisamment résistantes pour que lesdites lames chauffantes présentent une ou deux extrémités libres, en porte à faux, pouvant servir notamment de support de serviettes.

## Revendications

1. Procédé de soudure électrique pour l'assemblage d'éléments tubulaires pour radiateur à fluide caloporteur, notamment de soudure d'au moins un tube chauffant (4) avec une conduite collectrice (2, 3), disposés en croix et présentant des orifices en vis-à-vis en vue d'assurer la communication du fluide à l'intérieur desdits éléments tubulaires, comportant le serrage, entre deux électrodes, desdits éléments entre eux pour créer une zone de contact des parois externes desdits éléments et la réalisation de la soudure au niveau de ladite zone de contact par passage d'un courant de forte intensité pendant un temps très bref,
**caractérisé en ce que**, avant l'étape de serrage entre les électrodes, sont ménagées dans la paroi externe d'au moins un des éléments tubulaires à souder une première zone d'appui (11, 11'), dite zone d'appui initial, et une seconde zone d'appui (12, 12'), dite zone d'appui final après soudure des éléments tubulaires, la première zone d'appui étant localisée au moins à la périphérie d'au moins un des orifices de communication de fluide et formant une protubérance par rapport à la seconde zone d'appui (12, 12'), les éléments tubulaires comprenant deux conduites collectrices situées à proximité l'une de l'autre, au moins un tube chauffant comportant une chambre interne unique sans cloisonnement et deux orifices, respectivement un orifice d'entrée (5) et un orifice de sortie (7) du fluide, lesdits éléments tubulaires étant soudés simultanément.

2. Procédé de soudure selon la revendication 1,
**caractérisé en ce que** les deux conduites collectrices sont accolées.

3. Procédé de soudure selon la revendication 1 ou 2,
**caractérisé en ce que** la première zone d'appui (11, 11') formant protubérance est localisée exclusivement à la périphérie du ou des orifice(s) (5, 6, 7, 8).

4. Procédé de soudure selon l'une quelconque des revendications précédentes,
**caractérisé en ce que** la première zone d'appui (11, 11') formant protubérance est obtenue par déformation locale d'une portion de la paroi de l'élément tubulaire.

5. Procédé de soudure selon la revendication 4,
**caractérisé en ce que** la déformation locale est obtenue par élargissement de la section dudit élément tubulaire au niveau de la zone périphérique de l'orifice (5, 6, 7, 8).

6. Procédé de soudure selon la revendication 4,
**caractérisé en ce que** la déformation locale est obtenue par rétrécissement de la section dudit élément tubulaire dans la région adjacente à la zone périphérique de l'orifice (5, 6, 7, 8).

7. Procédé de soudure selon l'une quelconque des revendications précédentes,
**caractérisé en ce que** l'élément tubulaire constituant le tube chauffant (4) est sous la forme d'une lame parallélépipédique, l'orifice d'entrée (5) et l'orifice de sortie (7) étant ménagés à proximité de la même extrémité dudit tube chauffant (4).

8. Procédé de soudure selon l'une quelconque des revendications 1 à 6,
**caractérisé en ce que** l'élément tubulaire constituant le tube chauffant (4) est sous la forme d'une lame parallélépipédique, l'orifice d'entrée (5) et l'orifice de sortie (7) étant ménagés au niveau de la zone médiane dudit tube chauffant (4).

## Claims

1. An electric welding method for assembling tubular elements for a radiator with a heat transfer fluid, notably for welding at least one heating tube (4) with a collecting conduit (2,3), arranged as a cross and having facing orifices with view to ensuring communication of the fluid inside said tubular elements, including the clamping, between two electrodes, of said elements together in order to create a contact area of the external walls of said elements, and the making of the weld at said contact area by passing a current of strong intensity for a very short time,
**characterized in that**, before the clamping step between the electrodes, a first supporting area (11, 11'), a so-called initial supporting area, and a second supporting area (12, 12'), a so-called final supporting area after welding of the tubular elements, are made in the external wall of at least one of the tubular elements to be welded, the first supporting area being localized at least at the periphery of at least one of the fluid communication orifices, and forming a protrusion relatively to the second supporting area (12, 12'), the tubular elements comprising two collecting conduits located in proximity to each other, at least one heating tube, including a single inner chamber without any partitioning and two orifices, an inflow orifice (5) and an outflow orifice (7) for the fluid, said tubular elements being welded simultaneously.

2. The welding method according to claim 1,
**characterized in that** both collecting conduits are placed side-by-side.

3. The welding method according to claim 1 or 2,
**characterized in that** the first supporting area (11, 11'), forming a protrusion is exclusively localized at the periphery of the orifice(s) (5, 6, 7, 8).

4. The welding method according to any of the preceding claims,
**characterized in that** the first supporting area (11, 11'), forming a protrusion is obtained by local deformation of a portion of the wall of the tubular element.

5. The welding method according to claim 4, **characterized in that** the local deformation is obtained by widening the section of said tubular element at the peripheral area of the orifice (5, 6, 7, 8).

6. The welding method according to claim 4, **characterized in that** the local deformation is obtained by shrinkage of the section of said tubular element in the region adjacent to the peripheral area of the orifice (5, 6, 7, 8).

7. The welding method according to any of the preceding claims,
**characterized in that** the tubular element forming the heating tube (4), has the shape of a parallelepipedal strip, the inflow orifice (5) and the outflow orifice (7) being made in the proximity of the same end of said heating tube (4).

8. The welding method according to any of the preceding claims,
**characterized in that** the tubular element forming the heating tube (4), has the shape of a parallelepipedal strip, the inflow orifice (5) and the outflow orifice (7) being made at the middle area of said heating tube (4).

## Patentansprüche

1. Elektroschweißverfahren zum Verbinden von Rohrelementen für einen Radiator mit flüssigem Wärmeträger, insbesondere zum Verschweißen von mindestens einem Heizrohr (4) mit einer Sammelleitung (2, 3), die kreuzförmig angeordnet sind und gegenüberliegende Öffnungen aufweisen, um die Kommunikation des Fluids in den Rohrelementen abzusichern, das die Befestigung der Elemente zwischen zwei Elektroden untereinander aufweist, um eine Kontaktzone der Außenwände der Elemente und die Durchführung des Schweißens auf Ebene der Kontaktzone durch Anlegen eines sehr starken Stroms während einer sehr kurzen Zeit zu bewerkstelligen,
**dadurch gekennzeichnet, dass** vor dem Befestigungsschritt zwischen den Elektroden in die Außenwand von mindestens einem der zu verschweißenden Rohrelemente eine erste Abstützzone (11, 11'), als Anfangs-Abstützzone bezeichnet, und eine zweite Abstützzone (12, 12'), als End-Abstützzone bezeichnet, nach dem Schweißen der Rohrelemente, eingearbeitet werden, wobei sich die erste Abstützzone mindestens auf dem Umfang von mindestens einer der Fluid-Kommunikationsöffnungen befindet und eine Ausstülpung im Verhältnis zur zweiten Abstützzone (12, 12') bildet, wobei die Rohrelemente mindestens zwei Sammelrohre umfassen, die sich nah beieinander befinden, wobei mindestens ein Heizrohr eine einzige innere Kammer ohne Verschluss und zwei Öffnungen aufweist beziehungsweise eine Eingangsöffnung (5) und eine Ausgangsöffnung (7) des Fluids, wobei die Rohrelemente gleichzeitig geschweißt sind.

2. Schweißverfahren nach Anspruch 1,
**dadurch gekennzeichnet, dass** die zwei Sammelleitungen nebeneinander liegen.

3. Schweißverfahren nach Anspruch 1 oder 2,
**dadurch gekennzeichnet, dass** sich die erste Abstützzone (11, 11'), die eine Ausstülpung bildet, ausschließlich auf dem Umfang der Öffnung(en) (5, 6, 7, 8) befindet.

4. Schweißverfahren nach einem der vorangehenden Ansprüche,
**dadurch gekennzeichnet, dass** sich die erste Abstützzone (11, 11'), die eine Ausstülpung bildet, durch lokale Verformung eines Abschnitts der Wand des Rohrelements hergestellt ist.

5. Schweißverfahren nach Anspruch 4,
**dadurch gekennzeichnet, dass** die lokale Verformung durch Erweiterung des Querschnitts des Rohrelements auf Ebene der Umfangszone der Öffnung (5, 6, 7, 8) hergestellt ist.

6. Schweißverfahren nach Anspruch 4,
**dadurch gekennzeichnet, dass** die lokale Verformung durch Verengung des Querschnitts des Rohrelements in der zur Umfangszone der Öffnung (5, 6, 7, 8) benachbarten Region hergestellt ist.

7. Schweißverfahren nach einem der vorangehenden Ansprüche,
**dadurch gekennzeichnet, dass** das Rohrelement, das das Heizrohr (4) bildet, die Form einer parallelepipedischen Zunge aufweist, wobei die Eingangsöffnung (5) und eine Ausgangsöffnung (7) in der Nähe desselben Endes des Heizrohrs (4) ausgebildet sind.

8. Schweißverfahren nach einem der Ansprüche 1 bis 6,
**dadurch gekennzeichnet, dass** das Rohrelement, das das Heizrohr (4) bildet, die Form einer parallelepipedischen Zunge aufweist, wobei die Eingangsöffnung (5) und die Ausgangsöffnung (7) im Bereich der mittleren Zone des Heizrohrs (4) ausgebildet sind.
